# EUROPEAN PATENT SPECIFICATION

(11) **EP 1 407 453 B1**
(45) Date of publication and mention of the grant of the patent: **23.05.2007**
(21) Application number: 02736294.6
(22) Date of filing: 18.06.2002
(51) Int. Cl.: G11B 33/04

(54) **PACKAGING DEVICE AND METHOD FOR MANUFACTURING SAME**
VERPACKUNG UND VERFAHREN ZUR HERSTELLUNG DIESES
EMBALLAGE ET SON PROCEDE DE FABRICATION

(30) Priority: 18.06.2001 NL 1018321; 21.11.2001 NL 1019410
(43) Date of publication of application: 14.04.2004
(73) Proprietor: Fountain Technologies B.V., 2909 LC Cappelle a/d Ijssel (NL)
(72) Inventor: HOOGLAND, Hendricus, Antonius, NL-1562 ZN Krommenie (NL)
(74) Representative: Prins, Adrianus Willem
(86) International application number: PCT/NL2002/000398
(87) International publication number: WO 2002/103699

(56) References cited:
- EP-A- 0 961 280
- DE-U- 9 215 426
- DE-U- 29 600 288
- GB-A- 2 154 550
- US-A- 5 477 960
- US-A- 5 924 564

## Description

This invention relates to a package for plate-shaped information carriers. Such a package is known from practice.

Known packages for plate-shaped information carriers such as CDs, which are usually designated as Jewel box, comprise two polystyrene covers, connected with each other via hinge pins and associated openings in the side of the respective cover parts. In one of the cover parts, an inlay part is provided on which a rosette is arranged, consisting of a series of resiliently arranged projections. The CD can be pressed, by way of the central opening thereof, over the rosette in order to be secured in the package.

Further, a package for plate-shaped information carriers is known from EP-0,886,863, which comprises two cover parts, both pivotally connected with a back part. Provided on the back part are fingers or like elements, in pairs, between which a circumferential edge of a CD can be clamped. The CD can be inserted, approximately parallel to the plane thereof, between the clamping pairs of fingers and be pulled away from between them. The cover parts can be moved against each other, thereby enclosing the fingers and the CD, if any, received therebetween.

These known packages have as a disadvantage that they do not protect the CD optimally under all circumstances, while moreover relatively much space is needed. In particular the thickness of the closed package is relatively great.

British patent application number GB 2 154 550 A discloses a CD package comprising two cover parts pivotally connected to a back with fixing means being provided on said back. A CD can be introduced in said fixing means with part of the outer edge.

The invention contemplates a package of the type described in the opening paragraph, in which the disadvantages mentioned have been avoided, while maintaining the advantages thereof. To that end, a package according to the invention is characterized by the features according to claim 1.

With a package according to the invention, the advantage is achieved that the information carrier is optimally locked within the package, at least when the package is closed, while yet remaining properly accessible when the package has been opened. The or each elevation then offers the advantage that a greater stiffness of the package can be obtained, while moreover a better support of the information carrier is afforded.

In a first advantageous embodiment, a package according to the invention is further characterized by the features according to claim 3.

In such an embodiment, an information carrier such as a CD, chip card, DVD, diskette or the like can be secured, by an edge portion thereof, in the slotted recess, whereafter the package can be closed around it by pressing the cover parts against each other. It is then preferred that the information carrier can be pulled approximately parallel to its surfaces from the slotted opening. The slotted recess can be provided, for instance, in a trough-shaped element which is pivotally connected with at least one and preferably both cover parts. To that end, the or each pivotable cover part can be connected with a longitudinal edge of the trough-shaped part, adjacent the slotted opening provided therein, which connection can be, for instance, an integrally formed hinge.

A package according to the invention is preferably manufactured in one piece by injection molding, with integrally injection molded hinges, so-called living hinges.

In a further advantageous embodiment, a package according to the invention is further characterized by the features according to claim 12.

The use of in-mold labeling technique provides the advantage that in a particularly simple manner a proper finish of the package can be obtained, while moreover information can be provided directly. Thus, for instance, by means of the printing, a direct relationship can be created between the package and the information carrier to be stored therein. Alternatively, the printing can be provided with the aid of a printing technique involving, for instance, printing in the mold with transfer ink. Upon injection molding of the package in that mold, the transfer ink, and hence the printing, will be transferred to the package.

In a package according to the invention, the or each raised portion can be provided in the form of, for instance, integrally injection molded ribs, projections or the like and/or by foaming respective portions of the package. Use can then be made, for instance, of a technique as described in applicant's non-prepublished Dutch patent application 1014703, entitled "Method and apparatus for manufacturing plastic products having different wall structures".

The or each raised portion can then moreover be used for further locking the information carrier and/or as part of a closing mechanism for the storage device.

In an alternative embodiment, a package according to the invention is characterized by the features according to claim 16.

Such a package provides the advantage that it can be made of particularly thin design, that is, has a small thickness in closed condition, measured approximately transversely to the plane of the information carrier. The thickness is then substantially determined by the thickness of the cover parts linking up with the information carrier. Thus, moreover, a proper lock is obtained.

In particular if information is provided on the storage device, for instance by in-mold labeling, printing of the finished storage device and/or printing in the mold cavity, the storage device can have a minimal thickness because, as a consequence, no loose insert sheets or the like need to be included in the storage device.

The invention further relates to a method for manufacturing a package for information carriers, characterized by the features according to claim 17 or 18.

To clarify the invention, exemplary embodiments of a package and a method according to the invention will be further elucidated with reference to the drawing. In the drawing:
Fig. 1 schematically shows, in perspective view, a package according to the invention, in a first exemplary embodiment;
Fig. 2 shows, in partly sectional side elevation, the package according to Fig. 1, with the open position represented in broken lines;
Fig. 3 schematically shows, in perspective view, a package according to the invention in a second exemplary embodiment, in open condition;
Fig. 4 shows, in cross-sectional view along the line IV-IV in Fig. 3, a portion of the package in open condition;
Fig. 5 shows, in perspective view, the package according to Fig. 3 in closed condition;
Fig. 6 schematically shows, in perspective view, a package according to the invention in a third embodiment in opened condition;
Fig. 7 shows, in an elevation along the line VII-VII in Fig. 6, the package with cover part pivoted upwards;
Fig. 8 shows a package in a fourth exemplary embodiment in cross-sectional view along the line VIII-VIII in Fig. 9, with fitted information carrier;
Fig. 9 shows a package according to the invention in a fourth embodiment;
Fig. 10 shows, in an elevation along the line X-X in Fig. 9, the package according to Fig. 9;
Fig. 11 shows in detail a hinge construction of a package according to Figs. 8-10, in cross-sectional side elevation;
Fig. 12 schematically shows, in perspective view, an opened package according to the invention in a fifth exemplary embodiment;
Fig. 13 shows, in sectional view along the line XIII-XIII in Fig. 12, the package according to Fig. 12 in closed condition;
Fig. 14 schematically shows, in perspective view, an opened package according to the invention in a sixth embodiment;
Figs. 15A and B schematically show, in partly sectional side elevation, a package according to Fig. 14 in partly opened position and closed position, respectively;
Figs. 16-18 show packaging devices according to the invention, comparable to the devices according to Figs. 6, 9 and 12, respectively, in alternative embodiments;
Fig. 19 shows, in perspective view, an embodiment of a device according to the invention in opened position;
Fig. 20 shows a device according to Fig. 19, partly in cross section;
Fig. 21 shows, in perspective view, a portion of a device according to the invention, in particular a closing side, in closed position;
Fig. 22 shows a device according to Fig. 19 with a recessed portion in a cover part;
Fig. 23 shows a device according to Fig. 22 in a view similar to Fig. 20;
Fig. 24 shows a portion of a device according to the invention, in particular as shown in Fig. 19 or 22, in cross section, adjacent a longitudinal edge; and
Figs. 25-26 shows alternative embodiments for closures of a device according to the invention.

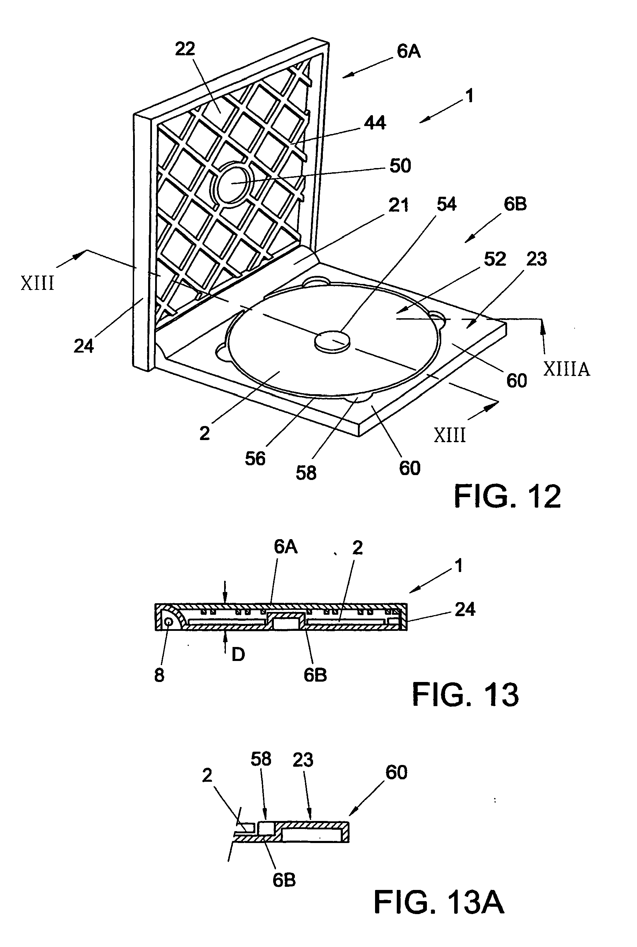

In this description, the same or corresponding parts have the same or corresponding reference numerals. In the exemplary embodiments shown, the invention is described in relation to plate-shaped information carriers in the form of CDs, understood to include at least CD, CD-singles, CD-i, DVD, CD-r and like substantially circular information carriers. However, packages according to the invention can be also be designed for packaging plate-shaped information carriers of a different kind, for instance of a substantially quadrangular, in particular rectangular shape, such as diskettes, chip cards, credit cards, telephone cards, SIM cards and the like, as well as for polygonal information carriers. In the exemplary embodiments shown, the packages are manufactured by injection molding, whilst in the exemplary embodiments shown in the figures the packages have been injection molded in one piece, with integrally formed hinges, with the exception of the embodiment shown in Figs. 12 and 13, where the package is built up from two parts, hinged together. It will be clear that the exemplary embodiments shown in the other figures can also be manufactured in more than one piece, while the embodiment shown in Figs. 12 and 13 can also be simply formed in one piece.

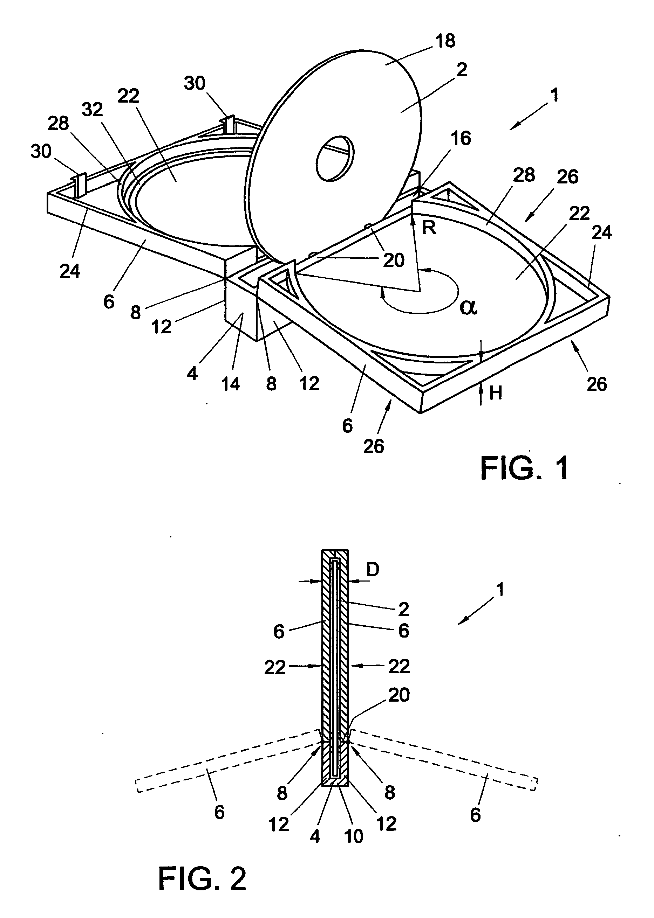

Figs. 1 and 2 show a first embodiment of a package 1 according to the invention, for packaging a CD 2. This package 1 comprises a somewhat trough-shaped part 4 and two cover parts 6 which are connected with the trough-shaped part 4 through integrally formed hinges (living hinges) 8. Cover parts 6 can be swiveled about the hinges 8 from the open position, shown in Fig. 1, to a closed position. In Fig. 2 the opened position of the cover parts 6 is represented in broken lines, the closed position in continuous lines. The trough-shaped part 4 has a bottom wall 10, two sidewalls 12 extending approximately parallel to each other, and two end walls 14 connecting sidewalls 12 and the bottom wall 10. The sidewalls 12 and end walls 14 define a somewhat slotted opening 16 in which a longitudinal edge 18 of the CD 2 can be received, clamped to some extent, preferably through projections 20 which are provided on the inside against the longitudinal wall 12. Preferably, they engage an unrecorded portion of the information carrier, close to the edge.

The cover parts 6 are substantially identical in shape and are each provided with a closed wall 22 which, when package 1 is closed, extend approximately parallel to, in particular in line with, the sidewalls 12. An upstanding longitudinal edge 24 extends from the surfaces 22 along the three free sides 26 of each cover part, which have a height H such that, with the package closed, the longitudinal edges 24 abut against each other, thereby completely enclosing the CD 2. The total thickness D of the closed package is therefore equal to 2*H and is small, for instance between 4 and 8 mm. Naturally, any suitable thickness can be obtained, as long as the CD 2 can be received between the surfaces 22. A curved wall 28 extends within the longitudinal edge 24, from the surfaces 22, which curved wall includes a segment of a circle with an included angle α and a radius R, which radius corresponds approximately with the radius of the CD 2. The included angle α has been chosen such that when the package 1 is closed, the curved edge 28 surrounds the CD 2 relatively closely, whilst the part of the CD not surrounded by the edge 28 is inserted in the trough-shaped part. In this way, a CD package has been obtained which has minimal dimensions, in particular minimal thickness. The edge 28 has a height which, for instance, is equal to the height H of the longitudinal edge 24, such that with the package closed the curved walls 28 of the two cover parts 6 abut against each other. As a result, the CD 2 is locked in optimum manner, while the possibility of the cover parts 6 bending is prevented, since in that case both the longitudinal edges 24 and the curved edges 28 lie against each other and define raised parts.

The cover part shown in Fig. 1 on the left-hand side of the CD is provided with closing lips 30, schematically represented as click fingers, which can engage in small recesses (not shown) in the longitudinal edge 24 remote from trough part 4, of the cover part 6 located on the right-hand side. As a result, the package 1 can be simply held in the closed position. On the surface 22 of the cover part shown on the left-hand side, a likewise substantially circular, slightly upstanding edge 32 is provided, at a small distance from the curved edge 28, which, with the package closed, abuts against the CD 2, engaging the peripheral portion 18. A comparable edge 32, not shown, can be provided in the cover part 6 shown on the right-hand side. What is thereby prevented still better is that the cover surfaces 22 abut against the CD at undesirable points.

In a package 1 according to Fig. 1, it is also possible that in one of the cover parts 6 the curved edge 28 has, for instance, the double height, while in the other cover part the curved edge 28 can be omitted altogether, so that a still better fit of the cover parts is obtained. Naturally, also the longitudinal edges 24 can be designed such that they engage wholly or partly into each other or around each other. In that case, for instance, clamping means may be provided as well, for retaining the cover parts 6 against each other.

In the embodiment shown in Fig. 1, the package 1 is manufactured from clear transparent plastic, for instance a metocene-based polypropylene as described in applicant's non-prepublished Dutch patent application no. 1017409, entitled "Packaging device for substantially platelike data carriers and method for manufacturing same". Naturally, such a package can also be made of non-transparent or opaque design.

A device 1 according to the invention can moreover be manufactured with a method as described in the non-prepublished Dutch patent applications NL 1019235 and NL 1019320, incorporated herein by reference. Advantageously, a device can be manufactured, for instance, from PET, POM, PC or like low-melt plastic.

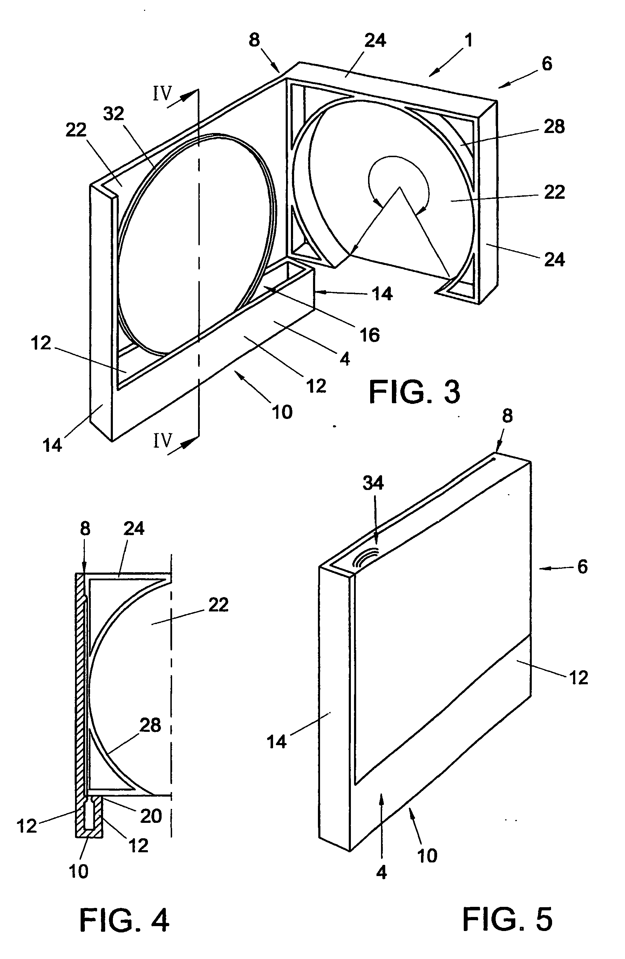

In Fig. 3 an alternative embodiment of a package 1 according to the invention is shown, where, again, a substantially trough-shaped part 4 is provided, provided with closed sidewalls 12, end walls 14 and a closed bottom face 10. In this embodiment, one of the longitudinal walls 12 has been lengthened, such that it also comprises a side surface 22, while the end wall 14 shown on the left-hand side in Fig. 3 extends along the full height of said surface 22. On the surface 22, again a substantially circular edge 32 in the form of a small elevation has been arranged, against which the longitudinal edge 18 of a CD 2 (not shown) can rest. On the longitudinal wall 12 located at the front in Fig. 3, again thickened portions 20 have been provided for clamping the CD. On the side of the surface 22 shown on the right-hand side in Fig. 3, via an integral hinge 8, a cover part 6 is connected, with an upstanding longitudinal edge 24 along three sides. A curved wall 28 again extends within the longitudinal edge 24 with an included angle α and a radius R approximately equal to that as shown in Fig. 1. For this embodiment too, it holds that when a CD 2 is inserted into the slotted recess 16, by way of a part of the longitudinal edge 18, it can abut against the edge 32, after which the cover part 6 can be swiveled against the wall 22, for locking the CD in the package 1 substantially within the wall 28. In Fig. 5 the package 1 is shown in closed condition.

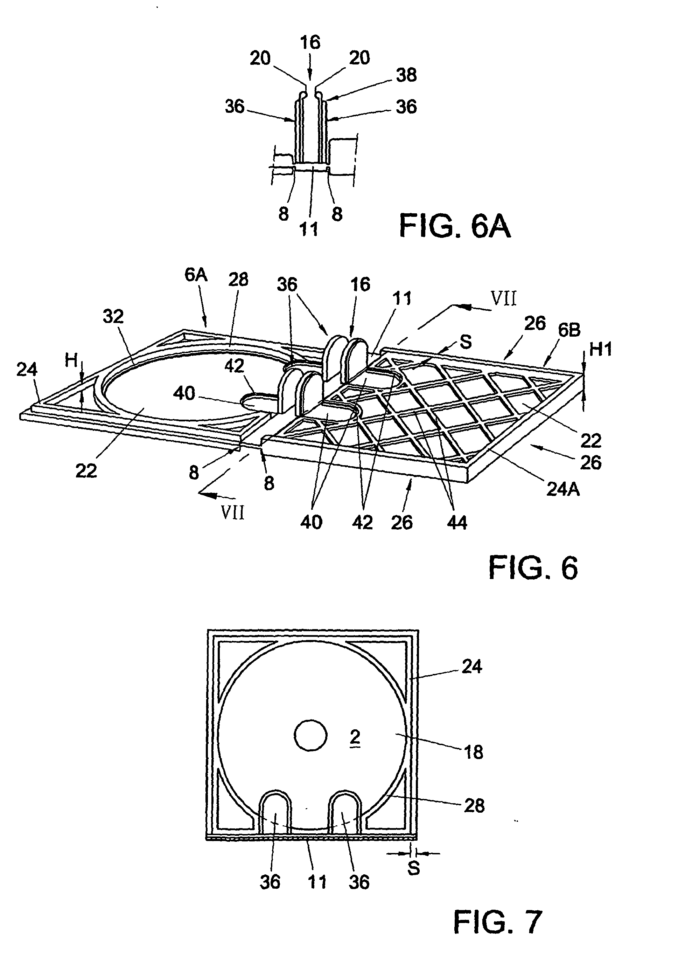

On the cover part 6, at least the side surface 22 thereof, on the side facing inwards in the closed condition, within the wall 28, there may be provided stiffening means, such as ribs or projections, which can be provided, for instance, in a manner as will be further described hereinafter with reference to Figs. 6, 9 and 12. Thus, bending of parts of the package can be prevented still better. In this embodiment, the longitudinal edge 24 shown on the right-hand side in Fig. 3, with the package closed, abuts against the inwardly facing side of the end wall 14, for further stiffening. It will be clear, however, that this end wall 14 can also be partly omitted. Closing means, such as click means or the like, can be provided on, for instance, the inwardly facing side of the end wall 14 and the longitudinal edge 24 which, with the package closed, abuts against it. Such closing means will be immediately clear to the skilled person.

With the package closed, both the longitudinal edge 24 and the curved wall 28 abut against the wall surface 22 of the adjacent part, so that a particularly stiff package is obtained, in particular when use is made of the stiffening means mentioned earlier. On the cover 6, for instance corrugations 34 or the like can be arranged for simplifying engagement of the cover for opening the package 1.

In Fig. 6, a further alternative embodiment is shown, in opened condition, of a package 1 according to the invention. In this embodiment, a back part 11 is provided, on which two pairs of fingers 36 are provided. The fingers of each pair link up with the opposite longitudinal edges of the back part 11, as schematically shown in Fig. 6A. The fingers 36 of each pair extend approximately parallel to each other, at right angles to the plane of the back part 11, while the pairs are arranged next to each other. The fingers 36 enclose a slotted opening 16, in which an edge part 18 of a CD 2 can be inserted, as schematically shown in Fig. 7. The fingers 36 are provided with projections 20, capable of clamping the CD 2. The fingers 36 each have, along their edge, an outwardly facing stepped surface 38, the purpose of which will be further explained hereinafter.

In Fig. 6, on the left-hand side, a first cover part 6A is shown; on the right-hand side a second cover part 6B. The cover parts 6 are connected to the back part 11 via integral hinges 8.

The first cover part 6a comprises a substantially flat side surface 22 with a longitudinal edge 24 extending therefrom, which is provided on all four sides. Along the three edges not connected with the back part 11, the longitudinal edge 24 has been inwardly offset over a distance S, for reasons to be further mentioned hereinafter. Within the longitudinal wall 24, again a curved wall 28 is provided, having a height H equal to the height of the longitudinal wall 24. Adjacent the fingers 36, in the first cover part 6a, a respective recess 40 is provided having an inwardly turned stepped surface 42. The shape and dimensions of the recess 40 and the stepped surface 42 are chosen such that, with the package closed, the stepped surface 38 abuts against the stepped surface 42, preferably such that the fingers 36 are pressed slightly inwards. Thus, when the package 1 is closed, a closed wall surface 22 is obtained, in that the recesses 40 are filled up by the fingers 36, while a minimal thickness D of the package is obtained.

The second cover part 6b comprises a side surface 22 which is provided along three free longitudinal edges 26 with an upstanding wall 24 of a height H1 and a thickness S, such that, with the package closed, the longitudinal wall 24a of the second cover part 6b fittingly encloses the longitudinal edge 24 of the first cover part 6a and abuts against the side surface 22 of the first cover part 6a outside the longitudinal edge 24. On the inside of the second cover part 6 b, there is provided a diamond pattern of ribs 44 which function as stiffening ribs. In this surface 22, too, recesses 40 are provided with stepped surfaces 42 which can fittingly cooperate with the stepped surfaces 38 of the fingers 36 placed on the back part 11 on the right-hand side. The thickness of the ribs 44 is selected such that, with the package closed, the curved wall 28 and the upstanding longitudinal wall 24 of the first cover part 6a abut against the ribs 44. On the first cover part 6a, again an edge 32 has been provided adjacent the curved wall 28 for support of the CD.

It will be clear that in a package according to Figs. 6 and 7, the fingers 36 can also have a slightly smaller thickness and may be displaced a distance from the hinges 8, while instead of the recesses 40, closed recessed portions are provided, such that, with the package closed, the fingers 36 can be locked in said recessed portions between the respective surfaces 22 of the cover parts 6a and 6b and the CD 2.

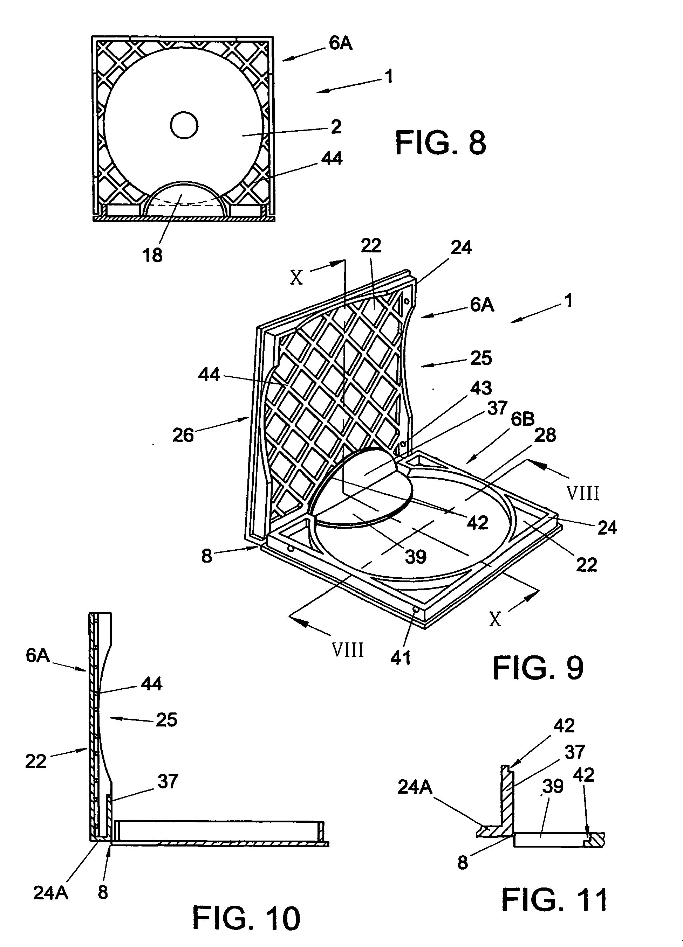

Figs. 8-11 show an embodiment of a package 1 according to the invention provided with a first cover part 6a and a second cover part 6b, jointly injection molded and mutually connected through a hinge 8. The first cover part 6a comprises a side surface 22 with an upstanding longitudinal edge 24 extending therefrom, along the four sides 26 thereof. On the part of the longitudinal edge 24a that is connected with the hinge 8, a locking lip 37 is provided, which extends approximately parallel to the side surface 22. On the side of the side surface 22 facing inwards in the closed position, ribs 44 are provided, for stiffening. The other three longitudinal edges 24 are each provided in a central area thereof with a indentation 25, which has a lowest height which is approximately equal to the height of the ribs 44. A CD 2 can, as shown in Fig. 8, be moved against the ribs 44, such that a longitudinal edge 18 thereof, at least by way of a part thereof, is received between the lip 37 and the ribs 44, preferably with a slightly clamped fit. The CD 2 is thereby retained in the first cover part 6a.

The second cover part 6b is substantially designed like the first cover part 6a as shown in Fig. 6, with an upstanding longitudinal edge 24, a curved wall 28 including a segment of a circle, and a side surface 22 on which the longitudinal edge 24 and the curved wall 28 are arranged. With the package closed, the longitudinal edge 24 of the first cover surface 6a abuts against the outer side of the longitudinal edge 24 of the second cover part 6b, while the side of the longitudinal edge 24 and/or the curved wall 28 remote from the side surface 22 abut against the ribs 44. In the side surface 22 of the second cover part 6b, an opening 39 is provided, shaped such that the lip 37 can be fittingly received therein. The lip 37 and the opening 39 are preferably provided with complementary stepped surfaces 42, such that, with the package closed, a substantially dustproof closure of the opening 39 is obtained by the lip 37, whereby the lip 37 can moreover be forced slightly in the direction of the ribs 44. The longitudinal edge 24 of the second cover part 6b is provided on the outside with a number of projections 41 which can cooperate with complementary cavities 43 on the inner side of the longitudinal edge 34 of the first cover part 6a, for obtaining a fitting closure. Fig. 11 represents, slightly enlarged, the lip 37 with stepped surface 42, as well as the recess 39 with stepped surface 42, as well as an integrally injection molded hinge 8. In this embodiment, the outer side of the lip 37 is approximately flush with the outer side of the side surface 22 of the second cover part 6b, when the package is closed, so that it obtains a particularly small thickness, since this thickness D is substantially determined by the distance between the outer surfaces of the lip 37 on the one hand and the side surface 22 of the first cover part 6a on the other. The elevations defined by the longitudinal edge 24 and the curved wall 28, which, with the package 1 closed, abut against the first cover part 6a, provide for a particularly stiff, closed package, as in the embodiments described earlier.

Figs. 12 and 13 show a further embodiment of a package 1 according to the invention, which is provided with a first cover part 6a and a second cover part 6b, hinged together in a manner as known from, for instance, the Jewel box. The cover parts 6a, 6b have been manufactured as loose parts. Naturally, such a package 1 can also be made of one-piece design.

The first cover part 6a comprises a side surface 22 with ribs 44 on the inside, comparable to the first cover part 6a according to Fig. 9, where, centrally in the side surface 22, a circular cavity 50 is provided, for reasons to be further described hereinafter. A longitudinal edge 24 extends around three sides of the side surface 22.

The second cover part 6b comprises a top surface 23 in which a circular recessed portion 52 is provided with a central upstanding stub 54 which can engage in the central opening of a CD 2. Preferably, the CD 2 can be pressed onto the stub 54 with a slightly clamped fit. However, the stub 54 can also be designed in a different manner, for instance as a rosette of the known storage box of the Jewel box type or in any other manner known per se, as, for instance, described in US 5,788,068 or EP 0 789 914. In the outer circumference 56 of the recessed portion 52, cavities 58 are provided in which fingers can be placed for taking out the CD 2. The corner parts 60 forming elevations can be made, for instance, of hollow design at the bottom side facing downwards in Fig. 12, as schematically shown in Fig. 13a, but may also, for instance, be foamed, so that a closed underside can be obtained, while undesirably long injection molding cycles are prevented. To that end, for instance, a foaming technique can be used as described in applicant's non-prepublished Dutch patent application 1014703 or according to WO 98/16364. Other techniques can also be used to that end.

In closed position, as shown in Fig. 13, the CD is fittingly locked between the two cover parts 6a, 6b, whilst the stub 54, at least rosette or like fixing means, is partly received in the recess 50, so that again a minimal thickness D of the closed package 1 is obtained. The longitudinal edge 24 then fits around the second cover part 6b. Appropriate closing means can be provided, for instance as described earlier with reference to Figs. 1, 19, 22 or 24.

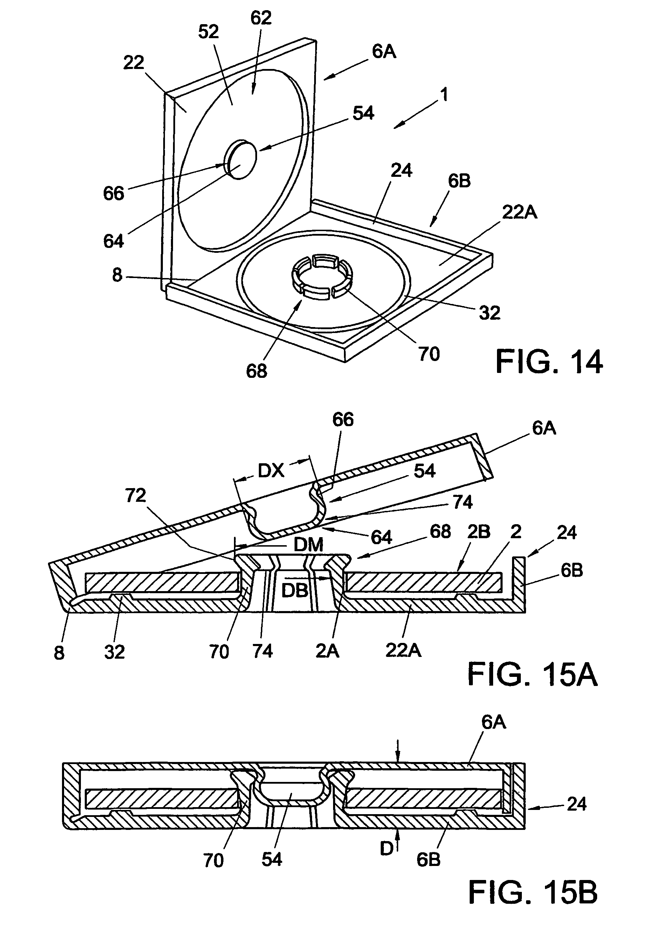

In Fig. 14, a further embodiment of a package 1 according to the invention is shown, again provided with a first cover part 6a and a second cover part 6b, integrally injection molded with a hinge 8 of the living hinge type. In this embodiment, the first cover part 6a is provided with a raised side surface 22 having a central, substantially circular recessed portion 52 in which a stub 54 is centrally arranged, which, with respect to the bottom surface 62 of the recessed portion 52, has a height such that the top surface 64 thereof is approximately flush with the surface 22. In the stub 54, a circumferential groove 66 is arranged, for reasons to be further described hereinafter. The side surface 22 is connected via the hinge 8 with a side surface 22a of the second cover part 6b. The other three sides of said side surface 22a are provided with an upstanding longitudinal edge 24, so that a trough-shaped cover part 6b is obtained. On the side of the side surface 22a facing inwards, a supporting edge 32 is arranged around a centrally disposed rosette 68, built up from a number of fingers 70. The rosette 68 and the stub 54 will be described in cooperation with reference to Figs. 15a and b.

Fig. 15a shows the package 1 according to Fig. 14 in a nearly closed position, with the first cover part 6a slightly inclined relative to the second cover part 6b. A CD 2 is fitted by way of the central opening 2a thereof over the rosette 68, along the fingers 70. The fingers 70 incline slightly inwards from the side surface 22a, in the direction of each other. Each finger is provided adjacent its upper end with an outwardly reaching clamping projection 72, as well as with an inwardly reaching second clamping projection 74. In the open position shown in Fig. 15a, the diameter DM of the rosette 68, measured over the outer edge of the clamping projections 72, is approximately equal to the inside diameter of the central opening 2a, or a little greater. The CD 2 can then, with slight resilient deformation of the fingers 70, be pressed over the rosette 68. In the position shown in Fig. 15a, the CD 2 rests on the supporting edge 32.

The stub 54 comprises a circumferential groove 66 and is provided adjacent the top surface 64, with a run-in edge 74. The diameter DX of the stub 54 between the groove 66 and the run-in edge 74 is slightly greater than the inside diameter DB of the fingers 70, measured directly under the second fixing projections 74. This means that when the stub 54 is pressed between the fingers 70, into the rosette 68, the fingers 70 are pushed away outwardly, so that the fixing projections 72 will engage on or above the top surface 2b of the CD 2, around the central opening 2a, while the stub 54 is pressed into the rosette 68 so far that the second fixing projections 74 will engage in the groove 66 in the stub 54. What is thus achieved is that, on the one hand, the fingers 70 are elastically pushed outwards, thereby locking the CD 2, and are fixed in this position by the stub 54, while on the other hand the first cover part 6a is thereby secured against the second cover part 6b, within the longitudinal edge 24, so that the side surface 22 of the first cover part 6a will at least partly abut against the side surface 22a of the second cover part 6b. As a result, a particularly stiff, compact package is obtained having a small thickness D. When the package 1 is opened by pressing or pulling the stub 54 from the rosette 68, at the same time the CD 2 is at least substantially released, so that, by way of the central opening 2a thereof, it can be pulled from the rosette 68.

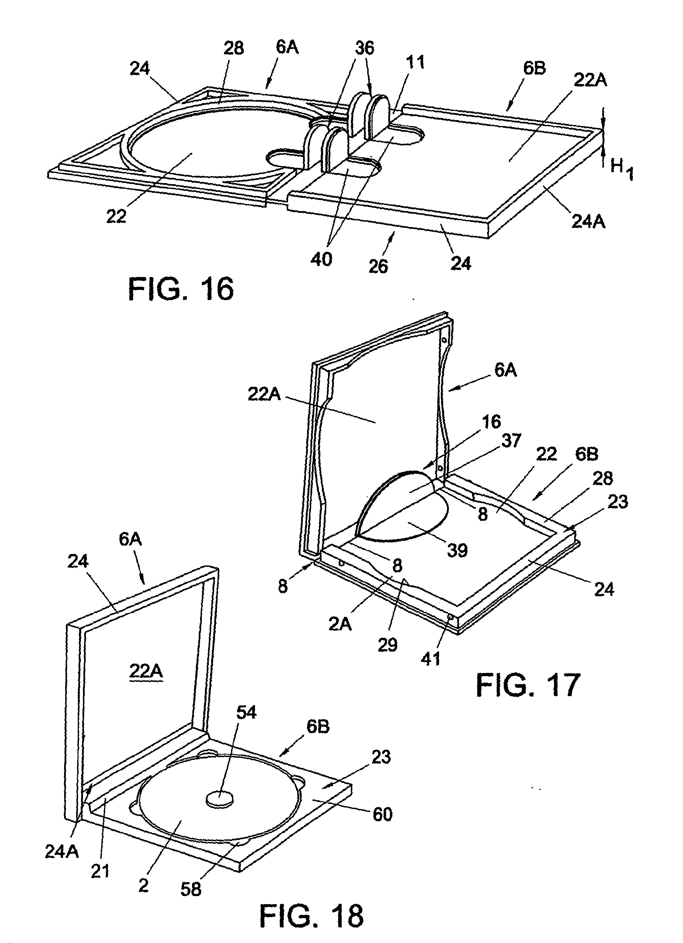

Fig. 16 shows a package 1 according to the invention, comparable to the packaging device as shown in Fig. 6, but in which the ribs 44 in the second cover part 6b have been omitted. The surface 22a is therefore flat on the side facing inwards. As a result, the respective cover part 6b has little torsional stiffness, at least less than in the embodiment according to Fig. 6. When the package 1 according to Fig. 16 is closed, the inside of the surface 22a abuts against the edges 24 and/or 28 of the first cover part 6a, so that the desired stiffness of the package 1, at least in closed condition, is obtained. If in this closed condition the package 1 is subject to slight torsion, the longitudinal edge 24, 24a of the second cover part 6b will at least partly come clear of the longitudinal edge 24 of the first cover part 6a, thereby enabling this package to be opened particularly simply. It will be clear that the package 1 can also be opened by pulling the two cover parts in flat condition away from each other.

Fig. 17 shows a packaging device 1 comparable to that as shown in Fig. 9, in which the ribs 44 in the first cover part 6a have again been omitted. It therefore holds for this packaging device 1 too that the first cover part 6a has relatively little torsional stiffness and the package 1 in closed condition obtains the desired stiffness in that the flat inner side of the surface 22a will rest against the edge 28 of the second cover part 6b. In this embodiment, a packaging device 1 is shown for receiving a substantially rectangular plate-shaped information carrier 2, of which in the second cover part 6b in chain-dotted lines a portion of the contour 2a is shown such as this information carrier will be received in the second cover part 6b when the package 1 is closed. Recesses 29 are provided so that not the entire contour 2a is in contact with the upstanding edge 28. With such a recess, therefore, the desired clamping force can be defined relatively simply. Of course, this inner edge can have any desired contour as long as it can close around the plate-shaped information carrier 2. In the embodiment shown, it is preferred that at least the corners 23 and preferably the entire upstanding edge 24, 28 are manufactured with the foaming technique described earlier, so that an edge closed on all sides is obtained with relatively little material, for which a short injection molding cycle will suffice.

In Fig. 18, a package 1 is shown, comparable to that according to Fig. 12, with the ribs 44 omitted from the first cover part 6a, to lower the torsional stiffness and reduce the thickness. The surface 22a can abut against the upper side of the edge 23 of the second cover part 6b, and, possibly, against the rosette 54. On the hinge side, the second cover part 6b is provided with a slightly raised edge 21 against which the longitudinal edge 24a of the first cover part 6a, proximal to the hinge side, can abut when the package 1 is closed. In case of one-piece manufacture of such a package, the longitudinal edge 24a can be simply connected via a living hinge 8 (not shown) with the longitudinal edge of the raised portion 21. A package according to Fig. 18 in closed condition is particularly thin, for instance between 2 and 4.5 mm, preferably about 3.2 mm, so that three such packages fit within the width of a conventional Jewel case.

It will be clear that the packages according to Figs. 17 and 18 in particular and the packages according to the invention in general can be simply designed such that they can be opened through slight torsion, as described earlier with reference to Fig. 16. Different embodiments of packages according to the invention can be simply designed for receiving two or more plate-shaped information carriers next to each other, in partial or complete mutual overlap.

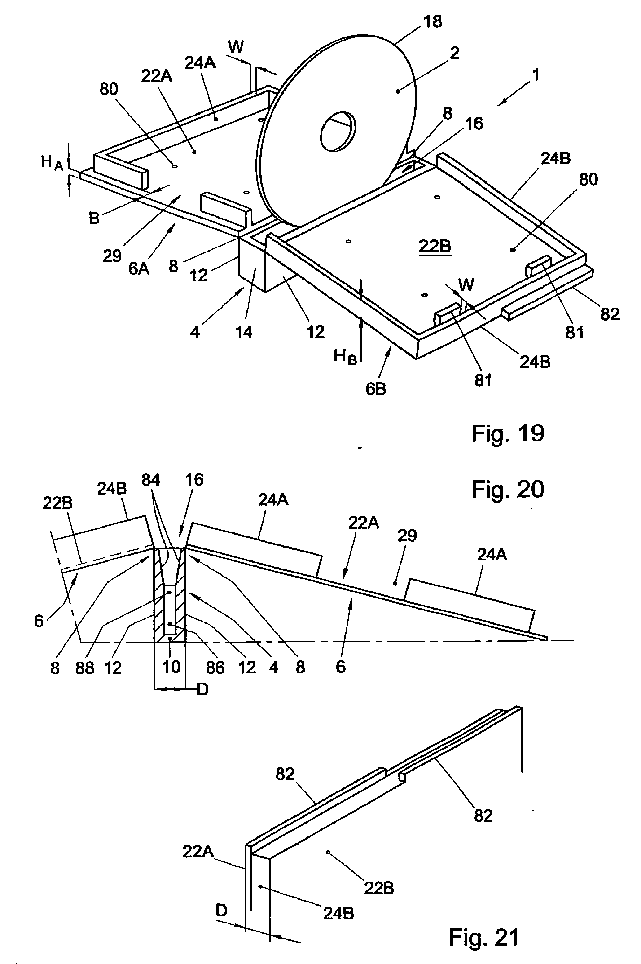

Fig. 19 shows a further alternative embodiment of a device 1 according to the invention, provided with a trough-shaped part 4, with cover parts 6A, 6B connected via hinge means 8 to two upper longitudinal edges of the sidewalls 12 thereof, the cover parts being jointly capable, in closed condition, of enclosing a CD 2 inserted into the slit-shaped opening 16. In this embodiment, the first cover part 6A shown in the figure on the left-hand side is provided with a closing surface 22A with an upstanding edge 24A spaced apart a distance B from the longitudinal edge of the closing surface, which upstanding edge 24A is provided on two opposite sides with an opening 29. The edge 24A is at a distance B from the longitudinal edge of the cover part 6A, which distance B at least substantially corresponds with the thickness of the upstanding edge 24B on the opposite second cover part 6B, which edge 24B extends along the longitudinal edge of the closing surface 22B of the respective cover part 6B. With the packaging device 1 closed, the longitudinal edge 24B abuts against the outer side of the longitudinal edge 24A, so that an outwardly closed package is obtained having a total width D which is substantially determined by the height H_{B} of the longitudinal edge 24B and the thickness H_{A} of the closing surface 22A. It is noted that the thickness of the closing surface 22A within the longitudinal edge 24A can be different, in particular smaller, than the thickness of said surface outside the longitudinal edge 24A, so that the device in closed condition can have a still smaller thickness. Optionally, the longitudinal edge 24A can also define the sides of the cover part 6A and fall entirely within the longitudinal edge 24B of the other cover part 6B. On the two closing surfaces 22A studs 80 are shown, which have a particularly small height and, with the device 1 closed, abut against the information carrier 2, such that it is held while locked completely. The studs 80 keep the surfaces of the information carrier, in particular the information-carrying parts thereof, spaced from the wall parts 22, thereby preventing damage still better. The studs 80 are preferably positioned such that they abut against the information carrier on unrecorded parts, in the case of a CD, for instance, close to the outermost longitudinal edge 18 and/or around the central opening. Incidentally, with the same purpose, a central small elevation may be provided under or around the central opening, resting against the CD, while the elevations can also have other forms than the studs shown, for instance segments of a ring, radial ridges or the like.

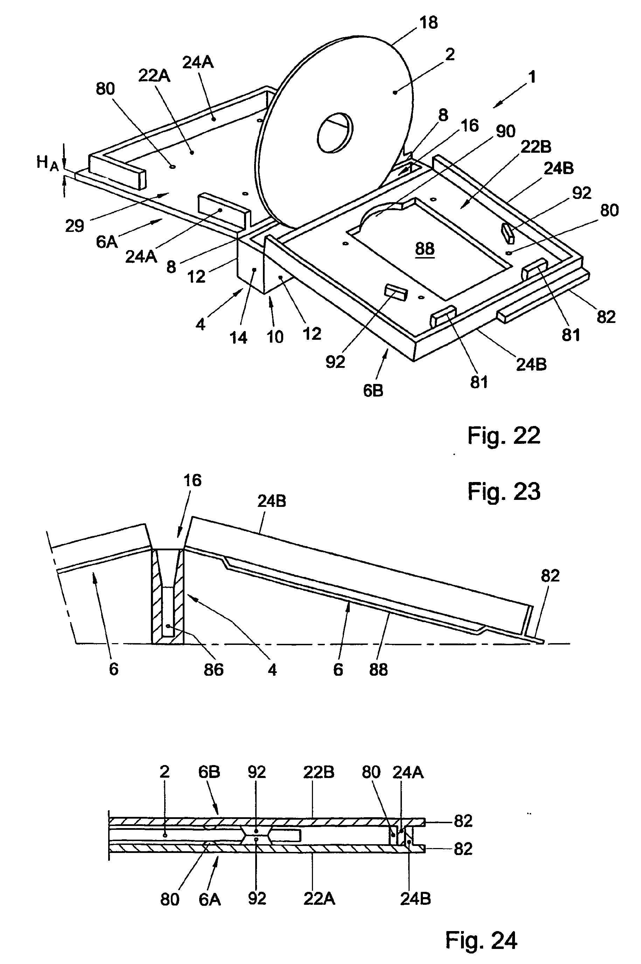

On the closing surface 22B of the second cover part 6B, two elevations in the form of ridges 81 are arranged, at a distance W from the adjacent longitudinal edge 24B, which distance W corresponds with the thickness W of the longitudinal edge 24A on the side of the first cover part 6A remote from the hinge 8. With the device 1 closed, said longitudinal edge 24A therefore comes to lie, so as to be locked, between the ridges 81 and the adjacent upstanding edge 24B, which preferably involves a slightly clamped fit. This position is shown in Fig. 24. The device 1 is thereby held in closed condition in a simple manner. The two cover parts 6A, 6B are provided, along approximately half their width, with a projecting lip 82, such as clearly shown in Fig. 21. By pressing these lips 82 away from each other from the situation shown in Fig. 21, the device 1 can be simply opened.

In the trough-shaped part 4 the slit 16 is provided, which decreases in width in the direction of the bottom face 10, preferably with walls 84 of slightly sloping configuration, such that a CD 2 which is inserted, by the longitudinal edge 18 thereof, into the slit 18 is guided along the walls 84, to a point adjacent the bottom face 10, and is clamped to some degree only in the lowermost part 86 of the slit 16. Cross walls 88 are provided adjacent the bottom face 10, for instance at right angles to the longitudinal direction of the slit-shaped opening 16, on which the CD 2 has its longitudinal edge 18 resting, so that the distance over which the CD 2 can be inserted into the trough-shaped part 4 is limited. The trough part 4 can then have relatively thin wall parts and yet support the information carrier 2 properly.

Fig. 22 shows a device 1 comparable to that as shown in Fig. 19, but in which a recessed portion 88 is provided in the closing surface 22B of the second cover part 6B, this recessed portion 88 in the embodiment shown being approximately rectangular, and of such dimension that a credit card of a second information carrier size can be received therein (not shown). Adjacent the hinge 8, a space recess is provided, so that the second information carrier can be readily taken from the recessed portion 88. Fig. 23 shows, in side elevation, the device according to Fig. 22, with partly sectioned trough-shaped part 4, and the recessed portion 88 clearly visible. With such a device, different information carriers can be readily received in a device 1.

In the embodiment shown in Fig. 22, next to the recessed portion 88, on the closing surface 22B, retention projections 92 are provided, at such a distance from the hinge 8 that the longitudinal edge 18 of the information carrier 2, when the device 1 is closed, abuts against these retention projections 92, which are preferably made of counter clearing design. These retention projections 92 still better prevent the possibility of the information carrier 2 moving within the closed device 1. As shown in Fig. 24, the retention projections 92 can also be provided on either side, that is, on each of the cover parts 6A, 6B.

As a device 1 according to the invention can be designed to be particularly thin, for instance a few millimeters, they require particularly little space. A device 1 according to the invention can have a thickness of, for instance, between 3 and 3.5 mm, so that three such devices can be stored in the space normally occupied by a single Jewel case. It is then preferred that a storage device according to the invention for the rest has outside dimensions in agreement with the corresponding dimensions of a Jewel case. However, a device according to the invention can naturally also have a variety of different dimensions, adapted to different information carriers. A device 1 according to the invention can be provided, on one or both cover parts, with a printing, in particular through in-mold labeling or through direct printing on surfaces of the device, so that the necessary information can be simply represented and inlay sheets are no longer needed. As a result, the cover parts can be in close proximity to the information carrier. Optionally, in-mold labels can also be provided across the hinges. A device 1 according to the invention is particularly economical in manufacture and use, in particular as a result of the small dimensions, while they can yet be applied in standard storage systems, transport systems and the like. Important economic advantages can be achieved in storage and transport. Despite the small thickness, storage devices according to the invention yet provide sufficient protection for information carriers locked therein.

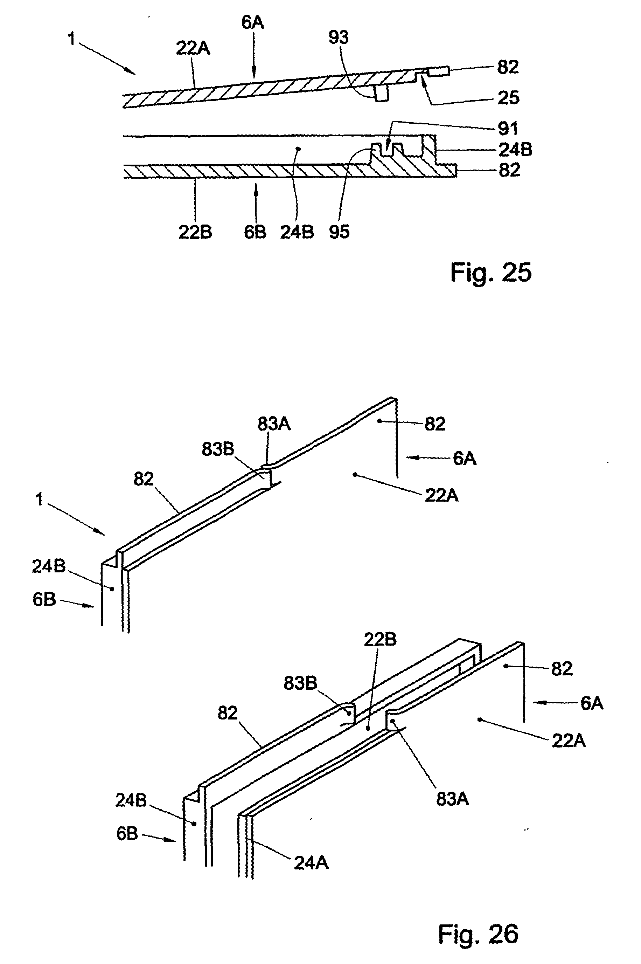

Fig. 25, representing a partly sectioned device, shows an alternative closure for a device 1 according to the invention. The first cover part 6A is provided with one or more pins 93 or like clamping means, which can also be, for instance, corrugations or ridges, while the opposite second cover part 6B, on the inner side of the closing surface 22B, opposite the or each pin 93 or the like, is provided with corresponding receiving cavities 91, for instance formed in a bush 95, in which the pin 93 can be received with a slightly clamped fit. To that end, the pins 93 and/or bushes 95 may also be arranged at a slight inclination. In this embodiment, the edge 24B falls into a groove 25 in the opposite cover part. Again, the device 1 can be simply opened by pressing the edges 82 apart.

Fig. 26 shows a further alternative embodiment of a closure for a device according to the invention, wherein each cover part 6A, 6B is provided with an edge 82, respectively extending along approximately half the width of the device 1, at least having a length such that the mutually facing ends 83A, 83B, with the device 1 closed, overlap slightly, as shown in Fig. 26, top. The bent edges 83A, 83B, to obtain a clamped fit, have preferably been slightly elastically deformed. For opening the device 1, the edges 82 can be pressed apart again, as shown in Fig. 26, bottom, so that the edges 83A, B are pushed away while slipping along each other. In this position, an information carrier can be inserted into the device in a particularly simple manner. Closure of the device proceeds in the reverse order.

All combinations of parts of devices as shown in the figures can be combined within the scope of the .invention.

A device according to the invention can be simply filled with an information carrier, by allowing the information carrier to fall into place under the influence of gravity. In particular in embodiments where the information carrier 2 is retained by a longitudinal edge thereof, this can be simply done by allowing the information carrier, in approximately vertical position, to fall between the clamping fingers, or into the slit in the trough-shaped element, and then closing the device.

The invention is not limited in any way to the exemplary embodiments shown in the description and the drawing. Many variations thereon are possible within the scope of the invention as outlined by the claims.

Thus, the above-described packages shown can also be designed for receiving differently shaped plate-shaped information carriers, such as triangular, quadrangular or polygonal information carriers. To be considered here, in particular, are information cards, such as credit cards, chip cards, sim cards, diskettes, minidisks, and the like. Means, if any, for securing information carriers in a central opening may then be omitted. In the exemplary embodiments shown, stiffening means such as ribs can also be simply replaced with other stiffening means such as foamed parts, stiffening edges, grooves, deformations and the like, or any inlaid elements. Packages 1 according to the invention can be provided in a manner known per se with printings, labels, inserts, and the like, while moreover in particular on the outer side, in a manner known per se, films can be provided, for instance for locking information means such as leaflets, booklets, and the like, between the cover parts and such film. Such film is preferably transparent. For the purpose of providing printings, it is preferred to use in-mold labeling techniques, while moreover other recognition means can be co-molded, for instance by encapsulation of magnetically or electronically readable means. A package according to the invention can be made of both transparent and opaque or partly transparent design.

These and many comparable variations are understood to fall within the scope of the invention outlined by the claims.

## Claims

1. A package (1) for plate-shaped information carriers (2), comprising cover parts (16), wherein fixing means (20) are provided for fixing at least one information carrier (2) in the package (1), and wherein the cover parts (6) are arranged for enclosing the information carrier (2) within the package (1), **characterized in that**, at least one of the cover parts (6) is provided with a raised portion (28, 44, 60, 92) which can surround the information carrier (2) at least partly and, with the package (1) closed, is located at a short distance from or against the opposite cover part (6), thereby locking said information carrier (2).

2. A package (1) according to claim 1, wherein at least one of the cover parts (6) is pivotally connected with a back part (11, 14).

3. A package (1) according to claim 1 or 2, wherein the fixing means (20) comprise at least one slotted recess (16), in which an edge part (18) of the information carrier (2) is receivable, which slotted recess (16) is connected with one of the cover parts (6).

4. A package (1) according to claim 3, wherein the slotted recess (16) is provided in a back part (11) which is pivotally connected with at least one of the cover parts (6) and is positioned such that the information carrier (2), approximately parallel to a flat side thereof, can be pulled from the slotted recess (16).

5. A package (1) according to claim 3 or 4, wherein the slotted recess (16) is provided adjacent a longitudinal edge (24) of one of the cover parts (6).

6. A package (1) according to any one of claims 3-5, wherein the slotted recess (16) is provided in a substantially trough-shaped element (4) which is pivotally connected with at least one of the cover parts (6).

7. A package (1) according to claim 6, wherein the trough-shaped element (4) is pivotally connected with the two cover parts (6).

8. A package (1) according to claim 7, wherein the two cover parts (6) are pivotally connected with mutually opposite longitudinal edges (12) of the trough-shaped part (4), adjacent the slotted opening (16) provided therein.

9. A package (1) according to any one of the preceding claims, where the two cover parts (6) are pivotally connected with each other or with an intermediate package part (11, 14).

10. A package (1) according to any one of the preceding claims, wherein at least one of the cover parts (6) comprises an upstanding edge (14) which, with the package (1) closed, abuts against an outwardly facing side of a longitudinal edge (24) of the opposite cover part (6).

11. A package (1) according to any one of the preceding claims, which has been substantially formed by injection molding in one piece with integrally injection molded hinges (8) (living hinges).

12. A package (1) according to any one of the preceding claims, wherein the package (1) is provided with printing, at least finish, by means of in-mold labeling technique.

13. A package (1) according to any one of the preceding claims, wherein the package (1) is provided with a printing, at least finish, through printing in a mold in which the package (1) has been injection molded, or through printing directly onto the package (1).

14. A package (1) according to any one of the preceding claims, wherein the or each raised portion (28, 44, 60, 92) comprises ribs, projections and/or like elevations, in particular series of ribs extending at an angle relative to each other, preferably honeycomb-shaped.

15. A package (1) according to any one of the preceding claims, wherein the or each elevation (60) has been provided by foaming a portion of the package (1).

16. A package (1) for plate-shaped information carriers (2), which package (1) has been substantially injection molded, comprising a preferably somewhat trough-shaped part (4) which via hinge means (8) is connected with a cover part (6), while said part is provided with at least one somewhat slot-shaped opening (16) in which an edge portion (18) of a plate-shaped information carrier (2) is receivable for fixing the information carrier (2), while two cover parts (6) are formed, such that, with the package (1) closed, the two cover parts (6) extend approximately parallel to each other, approximately in line with two opposite walls (12) of said part, **characterised in that**, on at least one of the cover parts (6) an elevation (28, 44, 60, 92) is included for further locking the information carrier (2) when the package (1) is closed.

17. A package (1) according to any one of the preceding claims, wherein at least one of the cover parts (6) and preferably both cover parts (6) are provided with elevations (28, 44, 60, 92) which are positioned such that, with the package (1) closed, said elevations (28, 44, 60, 92) abut against opposite sides of the information carrier (2), while the elevations (28, 44, 60, 92) preferably contact the information carrier (2) only at unrecorded surface parts.

18. A method for manufacturing a package (1) according to any one of the preceding claims, wherein the package (1) is substantially injection molded in one piece and wherein preferably a printing, at least print, is provided by means of in-mold labeling technique or in-mold printing technique.

19. A method for manufacturing a package (1) according to any one of claims 1-17, wherein the package (1) is manufactured from a transparent plastic, in particular a transparent polypropylene-containing plastic.

## Patentansprüche

1. Verpackung (1) für scheibenförmige Informationsträger (2), aufweisend Hüllenteile (16), in welchen eine Befestigungseinrichtung (20) zum Befestigen von wenigstens einem Informationsträger (2) in der Verpackung (1) vorgesehen ist, und in welcher die Hüllenteile (6) so angeordnet sind, dass sie den Informationsträger (2) innerhalb der Verpackung (1) einschließen,
**dadurch gekennzeichnet,**
**dass** wenigstens eines der Hüllenteile (6) mit einem erhabenen Abschnitt (28, 44, 60, 92) versehen ist, welcher den Informationsträger (2) zumindest teilweise umgeben kann und bei verschlossener Verpackung (1) in einer kurzen Entfernung von oder gegenüber dem entgegen gesetzten Hüllenteil (6) angeordnet ist, wodurch er den Informationsträger (2) verriegelt.

2. Verpackung (1) nach Anspruch 1,
in welcher wenigstens eines der Hüllenteile (6) schwenkbar mit einem Rückteil (11, 14) verbunden ist.

3. Verpackung (1) nach Anspruch 1 oder 2,
in welcher die Befestigungseinrichtung (20) wenigstens eine geschlitzte Vertiefung (16) aufweist, in welcher ein Randabschnitt (18) des Informationsträgers (2) aufnehmbar ist, welche geschlitzte Vertiefung (16) mit wenigstens einem der Hüllenteile (6) verbunden ist.

4. Verpackung (1) nach Anspruch 3,
in welches die geschlitzte Vertiefung (16) in einem Rückteil (11) vorgesehen ist, welcher schwenkbar mit wenigstens einem der Hüllenteile (6) verbunden und derart positioniert ist, dass der Informationsträger (2) ungefähr parallel zu einer seiner flachen Seiten aus der geschlitzten Vertiefung (16) herausgezogen werden kann.

5. Verpackung (1) nach Anspruch 3 oder 4,
in welcher die geschlitzte Vertiefung (16) benachbart zu einer Längskante (24) von einem der Hüllenteile (6) vorgesehen ist.

6. Verpackung (1) nach einem der Ansprüche 3 bis 5,
in welcher die geschlitzte Vertiefung (16) in einem im Wesentlichen trogförmigen Element (4) vorgesehen ist, welches schwenkbar mit wenigstens einem der Hüllenteile (6) verbunden ist.

7. Verpackung (1) nach Anspruch 6,
in welcher das trogförmige Element (4) schwenkbar mit den zwei Hüllenteilen (6) verbunden ist.

8. Verpackung (1) nach Anspruch 7,
in welcher die zwei Hüllenteile (6) schwenkbar mit jeweils einander gegenüberliegenden Längskanten (12) des trogförmigen Teils (4) verbunden sind, benachbart zur darin vorgesehenen geschlitzten Öffnung (16).

9. Verpackung (1) nach einem der vorstehenden Ansprüche,
in welcher die zwei Hüllenteile (6) schwenkbar miteinander oder mit einem dazwischen liegenden Verpackungsteil (11, 14) verbunden sind.

10. Verpackung (1) nach einem der vorstehenden Ansprüche,
in welcher wenigstens eines der Hüllenteile (6) eine aufrechte Kante (14) aufweist, welche bei verschlossener Verpackung gegen eine nach außen gerichtete Seite einer Längskante (24) des gegenüberliegenden Hüllenteils (6) stößt.

11. Verpackung (1) nach einem der vorstehenden Ansprüche,
welche im Wesentlichen durch Spritzgießen in einem Stück mit integrierten spritzgegossenen Scharnieren (8) (Filmscharnieren) gebildet ist.

12. Verpackung (1) nach einem der vorstehenden Ansprüche,
in welcher die Verpackung (1) mit einem Aufdruck versehen ist, mittels eines in der Form erfolgten Klebe- oder Etikettierverfahrens.

13. Verpackung (1) nach einem der vorstehenden Ansprüche,
in welcher die Verpackung (1) mit einem Aufdruck oder wenigstens einem Lack versehen ist, mittels Aufdrucken in einer Form, in welcher die Verpackung (1) spritzgegossen wurde, oder durch Aufdrucken direkt auf der Verpackung (1).

14. Verpackung (1) nach einem der vorstehenden Ansprüche,
in welcher der oder jeder erhabene Abschnitt (28, 44, 60, 92) Rippen, Vorsprünge und/oder dergleichen Erhöhungen aufweist, insbesondere Reihen von Rippen, die sich in einem Winkel relativ zueinander erstrecken, vorzugsweise bienenwabenförmig.

15. Verpackung (1) nach einem der vorstehenden Ansprüche,
in welcher die oder jede Erhöhung (60) durch Schäumen eines Abschnittes der Verpackung (1) bereitgestellt wird.

16. Verpackung (1) für scheibenförmige Informationsträger (2),
**welche** Verpackung (1) im Wesentlichen spritzgegossen wurde, aufweisend ein vorzugsweise etwa trogförmiges Teil (4), welches mittels einer Scharniereinrichtung (8) mit einem Hüllenteil (6) verbunden ist, während dieser Teil mit wenigstens einer etwa schlitzförmigen Öffnung (16) versehen ist, in welcher ein Randabschnitt (18) eines scheibenförmigen Informationsträgers (2) zum Befestigen des Informationsträgers (2) aufnehmbar ist, während zwei Hüllenteile (6) derart ausgebildet werden, dass bei verschlossener Verpackung (1) die zwei Hüllenteile (6) sich annähernd parallel zueinander erstrecken, ungefähr in Reihe mit zwei einander gegenüber liegenden Wänden (12) dieses Teils,
**dadurch gekennzeichnet,**
**dass** auf wenigstens einem der Hüllenteile (6) eine Erhöhung (28, 44, 60, 92), zum weiteren Verriegeln des Informationsträgers (2) bei verschlossener Verpackung (1) enthalten ist.

17. Verpackung (1) nach einem der vorstehenden Ansprüche,
in welcher wenigstens eines der Hüllenteile (6) und vorzugsweise beide Hüllenteile (6) mit Erhöhungen (28, 44, 60, 92) versehen sind, die derart positioniert sind, dass bei verschlossener Verpackung (1) die Erhöhungen (28, 44, 60, 92) gegen gegenüberliegende Seiten des Informationsträgers (2) stoßen, während die Erhöhungen (28, 44, 60, 92) vorzugsweise den Informationsträger (2) nur an den nicht aufzeichnenden Oberflächenteilen kontaktieren.

18. Verfahren zum Herstellen einer Verpackung (1) nach einem der vorstehenden Ansprüche,
in welchem die Verpackung (1) im Wesentlichen in einem Stück spritzgegossen ist und in welchem vorzugsweise ein Aufdruck, wenigstens ein Druck, mittels eines in der Form stattfindenden Kerbe- oder Etikettierverfahrens oder eines in der Form stattfindenden Druckverfahrens vorgesehen ist.

19. Verfahren zum Herstellen einer Verpackung (1) nach einem der Ansprüche 1 bis 17,
in welchem die Verpackung (1) aus einem transparenten Kunststoff hergestellt ist, insbesondere einem transparenten Polypropylen enthaltenden Kunststoff.

## Revendications

1. Emballage (1) pour supports de données en forme de plaque (2), comprenant des parties de couvercle (6), dans lequel des moyens de fixation (20) sont prévus pour fixer au moins un support de données (2) à l'intérieur de l'emballage (1), et dans lequel les parties de couvercle (6) sont agencées pour enfermer le support de données (2) à l'intérieur de l'emballage (1), **caractérisé en ce qu'**au moins une des parties de couvercle (6) comprend une partie surélevée (28, 44, 60, 92) qui peut entourer le support de données (2) au moins partiellement et, quand l'emballage (1) est fermé, est située à une faible distance de la partie de couvercle (6) opposée ou contre elle, pour ainsi bloquer ledit support de données (2).

2. Emballage (1) selon la revendication 1, dans lequel au moins une des parties de couvercle (6) est rattachée pivotante à une partie dos (11, 14).

3. Emballage (1) selon la revendication 1 ou 2, dans lequel les moyens de fixation (20) comprennent au moins un évidement fendu (16), dans lequel une partie de bord (18) du support de données (2) peut être logée, lequel évidement fendu (16) est rattaché à l'une des parties de couvercle (6).

4. Emballage (1) selon la revendication 3, dans lequel l'évidement fendu (16) est formé dans une partie dos (11) qui est rattachée pivotante à au moins une des parties de couvercle (6) et est positionnée de telle manière que le support de données (2), à peu près parallèlement à son côté plat, peut être tiré de l'évidement fendu (16).

5. Emballage (1) selon la revendication 3 ou 4, dans lequel l'évidement fendu (16) est prévu adjacent à un bord longitudinal (24) de l'une des parties de couvercle (6).

6. Emballage (1) selon l'une quelconque des revendications 3-5, dans lequel l'évidement fendu (16) est formé dans un élément sensiblement en forme d'auge (4) qui est rattaché pivotant à au moins une des parties de couvercle (6).

7. Emballage (1) selon la revendication 6, dans lequel l'élément en forme d'auge (4) est rattaché pivotant aux deux parties de couvercle (6).

8. Emballage (1) selon la revendication 7, dans lequel les deux parties de couvercle (6) sont rattachées pivotantes à des bords longitudinaux mutuellement opposés (12) de la partie en forme d'auge (4), adjacents à l'ouverture fendue (16) formée dedans.

9. Emballage (1) selon l'une quelconque des revendications précédentes, dans lequel les deux parties de couvercle (6) sont rattachées pivotantes l'une à l'autre ou à une partie d'emballage intermédiaire (11, 14).

10. Emballage (1) selon l'une quelconque des revendications précédentes, dans lequel au moins une des parties de couvercle (6) comprend un bord dressé (14) qui, quand l'emballage (1) est fermé, est en appui contre un côté regardant vers l'extérieur d'un bord longitudinal (24) de la partie de couvercle opposée (6).

11. Emballage (1) selon l'une quelconque des revendications précédentes, ayant été substantiellement formé par moulage par injection d'une seule pièce avec des charnières (8) moulées d'un seul tenant par injection (charnières souples).

12. Emballage (1) selon l'une quelconque des revendications précédentes, dans lequel l'emballage (1) est muni d'une impression, au moins d'un fini, au moyen d'une technique d'étiquetage dans le moule.

13. Emballage (1) selon l'une quelconque des revendications précédentes, dans lequel l'emballage (1) est muni d'une impression, au moins d'un fini, par impression dans un moule dans lequel l'emballage (1) a été moulé par injection, ou par impression directe sur l'emballage (1).

14. Emballage (1) selon l'une quelconque des revendications précédentes, dans lequel la ou chaque partie surélevée (28, 44, 60, 92) comprend des nervures, des saillies et/ou élévations analogues, en particulier des séries de nervures formant un angle l'une par rapport à l'autre, de préférence en forme de nid-d'abeilles.

15. Emballage (1) selon l'une quelconque des revendications précédentes, dans lequel la ou chaque élévation (60) a été formée par moussage d'une partie de l'emballage (1).

16. Emballage (1) pour supports de données en forme de plaque (2), lequel emballage (1) a été substantiellement moulé par injection, comprenant une partie de préférence sensiblement en forme d'auge (4) qui est rattachée par des moyens à charnière (8) à une partie de couvercle (6), ladite partie comprenant au moins une ouverture sensiblement en forme de fente (16) dans laquelle une partie de bord (18) d'un support de données en forme de plaque (2) peut être logée pour fixer le support de données (2), deux parties de couvercle (6) étant formées de telle manière que, quand l'emballage (1) est fermé, les deux parties de couvercle (6) s'étendent à peu près parallèles l'une à l'autre, à peu près alignées avec deux parois opposées (12) de ladite partie, **caractérisé en ce que**, sur au moins une des parties de couvercle (6), une élévation (28, 44, 60, 92) est incluse pour mieux bloquer le support de données (2) quand l'emballage (1) est fermé.

17. Emballage (1) selon l'une quelconque des revendications précédentes, dans lequel au moins une des parties de couvercle (6) et de préférence les deux parties de couvercle (6) sont munies d'élévations (28, 44, 60, 92) qui sont positionnées de telle manière que, quand l'emballage (1) est fermé, lesdites élévations (28, 44, 60, 92) sont en appui contre des côtés opposés du support de données (2), les élévations (28, 44, 60, 92) n'étant de préférence en contact avec le support de données (2) qu'au niveau de parties non enregistrées de sa surface.

18. Procédé de fabrication d'un emballage (1) selon l'une quelconque des revendications précédentes, dans lequel l'emballage (1) est substantiellement moulé par injection d'une seule pièce et dans lequel de préférence une impression, au moins d'un imprimé, est prévue au moyen d'une technique d'étiquetage dans le moule ou d'une technique d'impression dans le moule.

19. Procédé de fabrication d'un emballage (1) selon l'une quelconque des revendications 1-17, dans lequel l'emballage (1) est fabriqué en un plastique transparent, en particulier un plastique transparent contenant du polypropylène.
